(19) Europäisches Patentamt / European Patent Office / Office européen des brevets

(11) **EP 4 072 030 A1**

(12) **EUROPEAN PATENT APPLICATION**
published in accordance with Art. 153(4) EPC

(43) Date of publication:
**12.10.2022 Bulletin 2022/41**

(21) Application number: **21744749.9**

(22) Date of filing: **14.01.2021**

(51) International Patent Classification (IPC):
**H04B 1/401** (2015.01)  **H04B 7/06** (2006.01)
**H04B 7/08** (2006.01)  **H04W 88/10** (2009.01)

(86) International application number:
**PCT/CN2021/071687**

(87) International publication number:
**WO 2021/147747 (29.07.2021 Gazette 2021/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.01.2020 CN 202010070341**

(71) Applicant: **GUANGDONG OPPO MOBILE
TELECOMMUNICATIONS
CORP., LTD.
Dongguan, Guangdong 523860 (CN)**

(72) Inventor: **LIU, Chang
Dongguan, Guangdong 523860 (CN)**

(74) Representative: **Manitz Finsterwald
Patent- und Rechtsanwaltspartnerschaft mbB
Martin-Greif-Strasse 1
80336 München (DE)**

(54) **CUSTOMER PREMISE EQUIPMENT**

(57)    A customer premise equipment, comprising: N antennas, the N antennas being arranged at intervals in a peripheral direction of the customer premise equipment, and radiating surfaces of the N antennas at least facing four different directions; a radio-frequency circuit, connected to the N antennas, separately, configured to control the antennas to transmit/receive antenna signals, and correspondingly measuring network information of the antenna signals; and a processor (22), connected to the radio-frequency circuit (242), and configured to: configure multiple first transceiver antenna groups from the N antennas, wherein each first transceiver antenna group is composed of M antennas, and the M antennas of the first transceiver antenna group have three successively adjacent radiating surfaces facing different directions; obtain network information corresponding to the multiple first transceiver antenna groups; determine a target first transceiver antenna group according to the largest piece of network information among multiple pieces of network information; and configure the radio-frequency circuit (242) to control the target first transceiver antenna group to transmit/receive an antenna signal.

FIG. 1

Processed by Luminess, 75001 PARIS (FR)

EP 4 072 030 A1

**Description**

**CROSS REFERENCE TO RELATED APPLICATIONS**

The present application claims priority to Chinese Patent Application No. 2020100703411, with the title of "CUSTOMER PREMISE EQUIPMENT" filed with China National Intellectual Property Administration on January 21, 2020, the contents of which are herein incorporated by reference in their entireties.

**TECHNICAL FIELD**

The present disclosure relates to the field of wireless radio frequency technology, and in particular, to a customer premise equipment.

**BACKGROUND**

The statements here only provide background information related to the present disclosure, but not necessarily constitute prior art.

Customer premise equipment (CPE) is a mobile signal access device for receiving a mobile signal and forwarding it with a wireless WiFi signal, is also a device for converting a high-speed communication signal, such as a 4G or 5G signal, into a WiFi signal. A transmitting/receiving antenna of the customer premise equipment is fixedly mounted therein, and a radio frequency (RF) path of the customer premise equipment for controlling the transmitting/receiving antenna to transmit and receive an antenna signal is fixed. Therefore, when location and surrounding environment of the customer premises equipment change, the communication performance of the customer premises equipment may be affected.

**SUMMARY**

According to various embodiments of the present disclosure, a customer premise equipment is provided.

A customer premise equipment, including:

N antennas, arranged at intervals along a peripheral direction of the customer premise equipment, radiating surfaces of the N antennas facing at least four different directions;
a RF circuit, connected to the N antennas respectively, wherein the RF circuit is configured to control the antennas to transmit and receive an antenna signal, and correspondingly measure network information of the antenna signal; and
a processor, connected to the RF circuit, and configured to:

configure a plurality of first transceiver antenna groups from the N antennas, wherein the first transceiver antenna group consists of M antennas, the M antennas of the first transceiver antenna group include three radiating surfaces being sequentially adjacent and facing different directions, $3 \leq M < N$, and $N \geq 4$;
obtain network information corresponding to the plurality of first transceiver antenna groups;
determine a target first transceiver antenna group according to largest network information in a plurality of the network information; and
configure the RF circuit to control the target first transceiver antenna group to transmit and receive the antenna signal.

A customer premise equipment, including:

eight antennas, including four antenna groups arranged in pairs, wherein the four antenna groups are distributed on four surfaces at intervals along a peripheral direction of the customer premise equipment, and two antennas of the same antenna group are distributed on the same surface;
a RF circuit, connected to the eight antennas respectively, wherein the RF circuit is configured to control the antennas to transmit and receive an antenna signal, and correspondingly measure network information of the antenna signal; and
a processor, connected to the RF circuit, and configured to:

configure a plurality of first transceiver antenna groups from the eight antennas, wherein the first transceiver antenna group consists of four antennas, the four antennas of the first transceiver antenna group are distributed on three sequentially adjacent faces, and a set of antennas are disposed on a middle surface of the three sequentially adjacent faces;
obtain network information corresponding to the plurality of first transceiver antenna groups;
determine a target first transceiver antenna group according to largest network information in a plurality of the network information; and
configure the RF circuit to control the target first transceiver antenna group to transmit and receive the antenna signal.

The N antennas in the above customer premise equipment can be configured as a first transceiver antenna group for transmitting and receiving the antenna signal. Then, regardless of whether a current environment of the customer premise equipment changes, the customer premise equipment can determine a target first transceiver antenna group according to network information of the antenna signal of the plurality of first transceiver antenna groups correspondingly measured by the radio frequency circuit. Therefore, quality of the received antenna signal can be effectively improved, and performance of the customer premise equipment is improved.

Details of one or more embodiments of the present disclosure are proposed in the following drawings and description. Other features, objects, and advantages of the present disclosure will become apparent from the specification, drawings, and claims.

## BRIEF DISCRIPTION OF THE DRAWINGS

In order to make technical solutions described in embodiments of the present disclosure more clearly, the drawings used for the description of the embodiments or related art will be briefly described. Apparently, the drawings described below are only for illustration, but not for limitation. It should be understood that, one skilled in the art may acquire other drawings based on these drawings, without making any inventive work.

FIG. 1 is a schematic view of a structure of a network system architecture according to an embodiment of the present disclosure.
FIG. 2 is a schematic view of an external structure of a customer premise equipment according to an embodiment of the present disclosure.
FIG. 3 is a schematic view of an internal structure of a customer premise equipment according to an embodiment of the present disclosure.
FIG. 4 is a schematic view of an internal structure of a customer premise equipment according to another embodiment of the present disclosure.
FIG. 5 is a schematic view of a distribution structure of four antennas according to an embodiment of the present disclosure.
FIG. 6 is a schematic view of a distribution structure of six antennas according to an embodiment of the present disclosure.
FIG. 7a is a schematic view of a structure of eight antennas in a customer premise equipment according to an embodiment of the present disclosure.
FIG. 7b is a schematic view of a distribution structure of eight antennas in a customer premise equipment according to an embodiment of the present disclosure.
FIG. 7c is a schematic view of a distribution pattern of eight antennas in a customer premise equipment according to an embodiment of the present disclosure.
FIG. 8 is a schematic view of a connection between an antenna port and an antenna according to an embodiment of the present disclosure.
FIG. 9 is a schematic view of a composition of a first transceiver antenna group according to an embodiment of the present disclosure.
FIG. 10 is a schematic view of a composition of a second transceiver antenna group according to an embodiment of the present disclosure.
FIG. 11 is a schematic view of switching of each transceiver antenna group according to an embodiment of the present disclosure.
FIG. 12 is a schematic view of a composition of a third transceiver antenna group according to an embodiment of the present disclosure.
FIG. 13 is a schematic view of switching of each transceiver antenna group according to an embodiment of the present disclosure.
FIG. 14 is a schematic view of switching of each transceiver antenna group according to an embodiment of the present disclosure.

**DETAILED DESCRIPTION**

In order to make objects, technical solutions and advantages of the present disclosure more clearly understood, the present disclosure will be described in further detail below with reference to accompanying drawings and examples. It will be appreciated that the specific embodiments described herein are intended to explain the present disclosure and is not intended to limit the present disclosure.

In the present disclosure, the expression "configured to" may be used interchangeably in hardware or software, as the case may be, with "adapted to", "capable of', "able to" or "designed to", etc. In some cases, the expression "device/equipment/element configured to" may imply that the device/equipment/element may be used with other devices or components to be "able to" realize a function. For example, "processor configured to perform A, B, and C" may imply a processor for performing a corresponding operation by executing one or more software programs stored in a storage device.

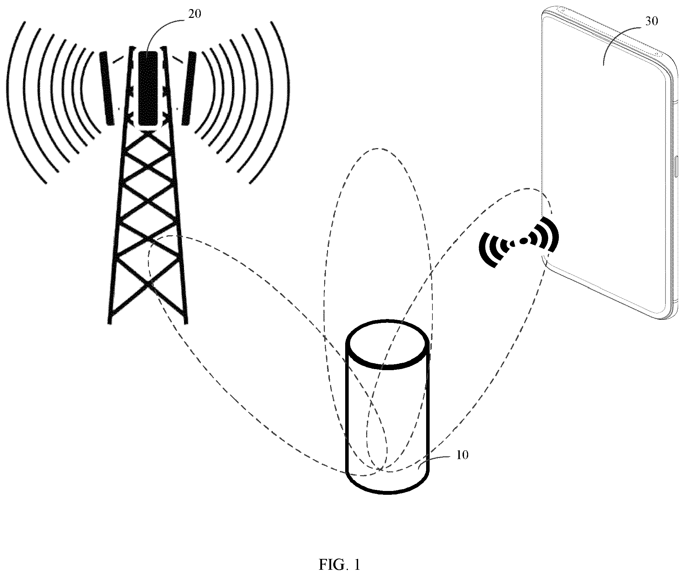

Referring to FIG. 1, a schematic view of a structure of a network system architecture according to an embodiment of the present disclosure is shown. In the network system architecture as shown in FIG. 1, a customer premise equipment 10 may be connected to a first base station 20 in a first network system and access to a core network through the first base station 20. The customer premise equipment 10 may be used to realize a network access function, convert operator's public network WAN to user's home LAN, and can support a plurality of mobile customer premise 10 to access a network at the same time. In addition, a cell and a second base station of a second network system may be deployed in vicinity of the customer premise equipment 10, or the cell and the second base station of the second network may not be deployed in vicinity of the customer premise equipment 10. The first network RF system may be different from the second network system, for example, the first network system may be a 4G system, and the second network system may be a 5G system; alternatively, the first network system may be a 5G system, and the second network system may be a future PLMN system evolved after 5G. RF systems of the first network system and the second network system are not limited in the embodiments of the present disclosure.

When the customer premise equipment 10 connects to a 5G communication system, the customer premise equipment 10 may transmit and receive data with a corresponding base station through a beam formed by a 5G millimeter wave antenna module. The beam needs to be aligned with an antenna beam of the corresponding base station, so as to facilitate the customer premise equipment 10 to transmit uplink data to the base station or receive downlink data transmitted by the base station.

The customer premise equipment 10 may be used to realize the network access function, convert operator's public network WAN to user's home LAN. Current internet broadband access modes may include fiber to the home (FTTH), digital subscriber line (DSL), Cable, Mobile (i.e., wireless customer premise equipment (CPE)) and so on. The customer premise equipment may be a mobile signal access device that receives a mobile signal and forwards it with a wireless WiFi signal. The customer premise equipment may be also a device that converts a high-speed 4G or 5G signal into a WiFi signal and can support the plurality of mobile terminals 30 to access the network at the same time.

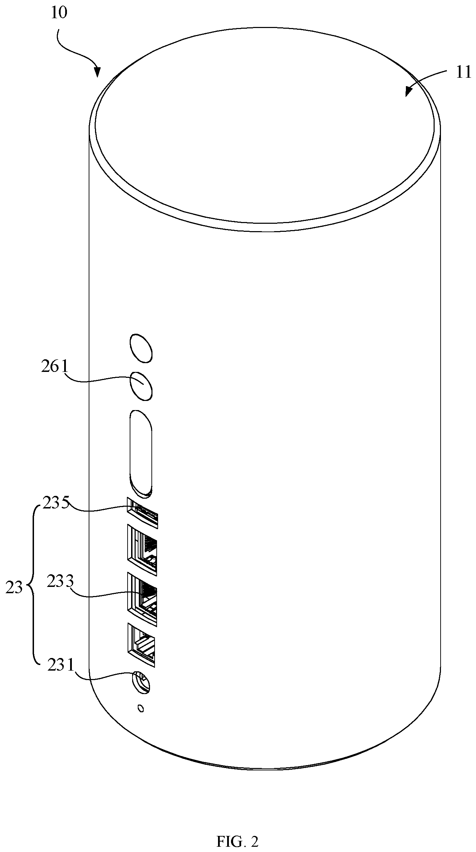

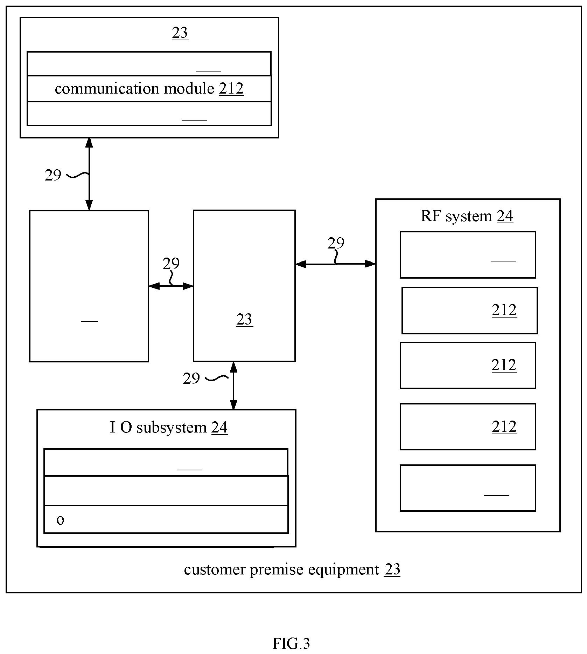

Referring to FIGS. 2 and 3, a customer premise equipment is provided according to an embodiment of the present disclosure. The customer premise equipment 10 may include a housing 11, a memory 21 (which optionally includes at least one computer readable storage medium), a processor 22, a peripheral device interface 23, a radio frequency (RF) system 24, an input/output (I/O) subsystem 26, and an external port 27. These components may communicate over one or more communication buses or signal lines 29. It should be understood by those skilled in the art that, the customer premise equipment shown in FIG. 2 is not for limitation. The customer premise equipment may include more or less components than those shown in FIG. 2, or combine some components, or have different components arrangements. The components shown in FIG. 2 may be hardware, software, or a combination of both, including one or more signal processing circuits and/or application specific integrated circuits.

The housing 11 has a substantially cylindrical shape, and the appearance of the customer premise equipment 10 is mainly presented by the housing 11. In other embodiments, the housing 11 may have other shapes, such as a prismatic shape, and the like. The peripheral device interface 23 and the external port 27 are exposed to the housing 11. The peripheral device interface 23 includes a power interface 231, a USB interface 233, a network cable interface 235, and the like. The power interface 231 is configured to connect to an external power source, so as to supply power to the customer premise equipment 10 by the external power source. The USB interface 233 can be used for data transmission of the customer premise equipment 10 between an external device. The USB interface 233 and the power interface 231 may be integrated to simplify the arrangement of the peripheral device interface 23 of the customer premise equipment 10. The network cable interface 235 can further include a wired network access terminal and a wired network output terminal. The customer premise equipment 10 can be connected to a network through the wired network access terminal, and then connected to other devices via one or more wired network output terminals. In an embodiment, the wired network output terminal can be defaulted, that is, after the customer premise equipment 10 is connected to the network using the wired network access terminal, the customer premise equipment 10 convers the wired network into a wireless network (e.g., WiFi) using the RF system 24 so that external equipment can access the network. Alternatively, both the wired network access terminal and the wired network output terminal can be defaulted; in this embodiment, the customer premise equipment 10 can access a cellular network (also known as a mobile network) through the RF system 24, and then convert a signal of the network to a WiFi signal, so that the external equipment can access the network.

The memory 21 may include a high-speed random access memory and may also include a non-volatile memory, such as one or more disk storage devices, flash memory devices, or other non-volatile solid-state memory devices. In some embodiments, software components stored in the memory 21 may include an operating system 211, a communication module (or instruction set) 212, a global positioning system (GPS) module (or an instruction set) 213, and the like.

The processor 22 and other control circuits (such as the control circuit in the RF circuit 24) may be configured to control operations of the customer premise equipment 10. The processor 22 can be based on one or more microprocessors, microcontrollers, digital signal processors, baseband processors, power management units, audio decoder chips, application specific integrated circuits (ASIC), etc.

The processor 22 may be configured to implement a control algorithm that controls the use of an antenna in the customer premise equipment 10. For example, the processor 22 may be configured to control the RF system 24 to screen out a plurality of antennas for constituting a plurality of transceiver antenna groups. Then, a target antenna group can be selected from the plurality of transceiver antenna groups to transmit and/or receive an antenna signal.

The I/O subsystem 26 couples input/output peripherals such as a keypad and other input control devices on the customer premise equipment 10 to a peripheral device interface 23. The I/O subsystem 26 may optionally include a touch screen, a button, a joystick, a trackpad, a keypad, a keyboard, a tone generator, an accelerometer (motion sensor), an ambient light sensor and other sensors, a light emitting diode and other status indicator, data ports, etc. Exemplary, the housing 11 can also have a button 261 and the like, and the button 261 is used to control a working state of the customer premise equipment 10. The user may control the operation of the customer premise equipment 10 by supplying commands via the I/O subsystem 26, and may receive status information and other outputs from the customer premise equipment 10 using the output resources of the I/O subsystem 26. For example, the user presses the button 261 to activate the customer premise equipment 10 or turn off the customer premise equipment 10. The housing 11 can also have an indicator or other components for prompting the operating state of the customer premise equipment 10.

In an embodiment, the button 261 and the peripheral device interface 23 are exposed to the same side of the housing 11, which facilitates the assembly of the button 261 and the peripheral device interface 23, and enhances the appearance characteristics of the customer premise equipment 10, and can improve the convenience of use. This setting can be replaced with other settings, for example, the peripheral device interface 23 and the button 261 may be exposed to different sides of the housing 11, respectively.

The RF system 24 may include a plurality of antennas 241. The antenna 241 may be formed by any suitable type of antenna. For example, the antenna 241 may include an antenna having a resonant element and formed by at least one of an antenna structure such as an array antenna structure, a loop antenna structure, a patch antenna structure, a slot antenna structure, a helical antenna structure, a strip antenna, a monopole antenna, a dipole antenna, and the like. Different types of antennas can be used for transmitting and receiving different frequency bands and band combinations. The customer premise device 10 may include a plurality of antennas, for example, a plurality of 5G antennas for receiving and transmitting sub-6GHZ frequency bands. These antennas can be directional antennas, non-directional antennas, or fixed antennas.

The RF system 24 may also include a plurality of RF circuits 242 for processing RF signals of different frequency bands. For example, the RF circuit 242 may be a satellite positioning RF circuit for receiving 1575MHz satellite positioning signal, a WiFi and Bluetooth transceiver RF circuit for processing IEEE 802.11 communication in 2.4GHz and 5GHz bands, or a cellular phone transceiver RF circuit for handling wireless communications in cellular phone frequency bands (such as 850MHz, 900MHz, 1800MHz, 1900MHz and 2100MHz, or sub-6G frequency band). The sub-6G frequency band may include a frequency band of 2.496 GHz-6GHz, 3.3GHz-6GHz.

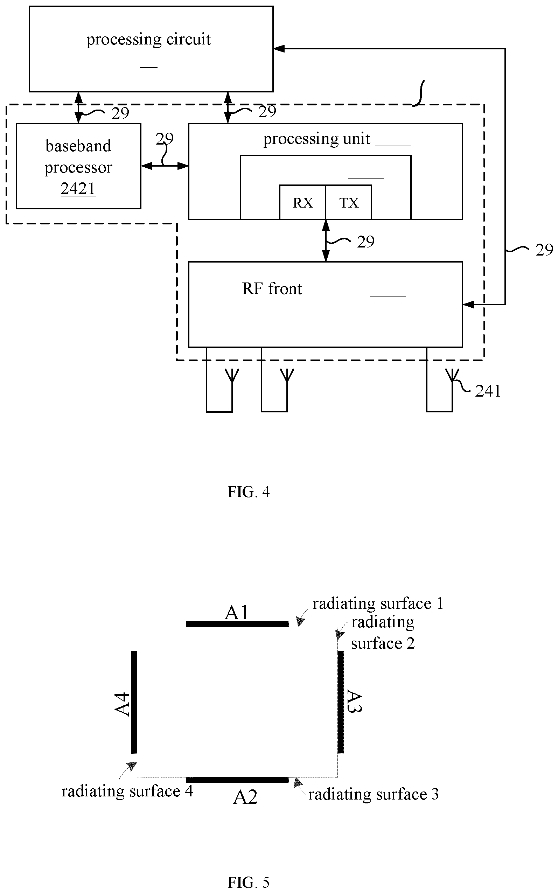

Referring to FIG. 4, in some embodiments, the RF circuit 242 may also include a baseband processor 2421, a RF transceiver unit 2422, and a RF front-end unit 2423. The baseband processor 2421 may provide network information to the processor 22. The network information may include raw and processed information associated with the wireless performance measurement of received an antenna signal, such as a receiving power, a transmitting power, a reference signal receiving power (RSRP), a reference signal receiving quality (RSRQ), a received signal strength indicator (RSSI), a signal to noise ratio (SNR), a rank of multiple-input multiple-output (MIMO) channel matrix, a carrier to interference plus noise ratio (RS-CINR), a frame error rate, a bit error rate, channel quality measurement based on signal quality data (such as Ec/Io or c/No data), information about whether a response corresponding to a request from the mobile terminal is being received from the base station, information about whether a network access process is successful, and so on.

The processor 22 may analyze the received network information, and in response, the processor 22 (or the baseband processor 2421) may send control commands for controlling the RF system 24. For example, the processor 22 may send a control command to control a plurality of transceiver antenna groups of the RF system 24 to be in a working state in sequence, and can further determine a target transceiver antenna group from the plurality of transceiver antenna groups so as to control the target transceiver antenna group to transmit and receive an antenna signal. The transceiver antenna group includes a plurality of antennas.

The RF transceiver unit 2422 may include at least one RF transceiver, for example at least one transceiver 2424 (such as at least one transceiver shared between antennas, a transceiver corresponding to an antenna, and the like). In some embodiments, the transceiver 2424 may include a transmitter (e.g., a transmitter TX) and a receiver (e.g., a receiver RX). Alternatively, the transceiver 2424 may include only a receiver (e.g., a receiver RX) or only a transmitter (e.g., a transmitter TX). For example, the transceiver can be used for realizing frequency conversion processing between an intermediate frequency signal and a baseband signal, or/and for realizing the frequency conversion processing between an intermediate frequency signal and a high frequency signal, etc.

The baseband processor 2421 may receive digital data to be transmitted from the processor 22, and may also transmit a corresponding antenna signal through the RF transceiver unit 2422. The RF front-end unit 2423 may be coupled between the RF transceiver unit 2422 and the antenna 241, and may be used to transmit a RF signal generated by transmitters 2424 and 2426 to the antenna 241. The RF front-end unit 2423 may include a RF switch, an impedance matching circuit, a filter, and other circuits for forming an interface between the antenna 241 and the RF transceiver unit 2422.

In an embodiment, the RF switch of the RF front-end unit 2423 can be a plurality of interfaces, and the plurality of interfaces can be a mobile industry processor interface (MIPI) and/or a general-purpose input/output interface (GPIO). Corresponding control units for the interfaces can be MIPI control units and/or GPIO control units. A plurality of pins of each interface can be connected to a plurality of antennas in one-to-one correspondence. When a RF path between the transceiver antenna group and the RF transceiver unit 2422 needs to be conducted, the MIPI control unit can output clock and data signal to a corresponding pin connected to each antenna in the transceiver antenna group. The GPIO control unit can output a high-level signal to a corresponding pin connected to each antenna in the transceiver antenna group.

In an embodiment, the RF switch can also be a single-pole multi-throw switch, a multi-pole multi-throw switch, an electronic switch, etc. A corresponding control unit can be set to control the RF switch to correspondingly conduct a RF path between each antenna in the transceiver antenna group and the RF transceiver unit 2422.

When the RF front-end module 312 controls the RF path between the transceiver antenna group and the RF transceiver unit 2422 to be conducted, the RF transceiver unit 2422 can obtain an antenna signal received by the transceiver antenna group, and analyze and process the received antenna signal to obtain network information of the antenna signal.

In an embodiment, the customer premise equipment 10 can correspondingly obtain channel quality information in the network information when any transceiver antenna group is in the working state. The channel quality information can include at least one of a modulation order, a code rate, or a spectral efficiency. A quality of the channel can be quantified as an index of channel quality indication (CQI). The channel quality information obtained by the customer premise equipment 10 can reflect the quality of the current channel. The present disclosure will be described by taking the acquisition of frequency efficiency as an example.

Exemplary, the customer premise equipment 10 can obtain a CQI value $cqi_k$ of each stream via Sinr according to a CQI-Sinr mapping table as shown in Table 1, and corresponding obtain a code rate $R_k$ of each stream according to a CQI-code rate mapping table as shown in Table 2 Then, the customer premise equipment 10 can obtain a corresponding spectral efficiency corresponding to a spectral efficiency formula, as follows:

$$efficiency = \sum_{n=1}^{Rank} m * R_k$$

Table 1: CQI-Sinr mapping table

| CQI | 1 | 2 | 3 | 4 | 5 | 6 | 7 | 8 | 9 | 10 | 11 | 12 | 13 | 14 | 15 |
|------|----|----|-------|-------|------|------|-----|------|-----|-------|------|------|-------|-------|-----|
| Sinr | -6 | -4 | -2.75 | -0.75 | 1.25 | 2.75 | 5.0 | 6.75 | 8.5 | 10.75 | 12.5 | 14.5 | 16.25 | 17.75 | 20 |

Table 2: CQI-code rate mapping table

| CQI code | Modulation | Code ratex1024 | Efficiency |
|----------|------------|----------------|------------|
| 0 | Out of range | | |

(continued)

| CQI code | Modulation | Code ratex1024 | Efficiency |
|---|---|---|---|
| 1 | QPSK | 78 | 0.1523 |
| 2 | QPSK | 193 | 0.3770 |
| 3 | QPSK | 449 | 0.8770 |
| 4 | 16QAM | 378 | 1.4766 |
| 5 | 16QAM | 490 | 1.9141 |
| 6 | 16QAM | 616 | 2.4063 |
| 7 | 64QAM | 466 | 2.7305 |
| 8 | 64QAM | 567 | 3.3223 |
| 9 | 64QAM | 666 | 3.9023 |
| 10 | 64QAM | 772 | 4.5234 |
| 11 | 64QAM | 873 | 5.1152 |
| 12 | 256QAM | 711 | 5.5547 |
| 13 | 256QAM | 797 | 6.2266 |
| 14 | 256QAM | 885 | 6.9141 |
| 15 | 256QAM | 948 | 7.4063 |

A modulation step determines the number of bits transmitted in one symbol. For example, the modulation step of a quadrature phase shift keying (QPSK) is 2, the modulation step of a 16QAM (quadrature amplitude modulation) is 4, while the modulation step of a 64QAM is 6.

The code rate is the ratio between the number of information bits in the transmission block and the total number of bits in the physical channel.

The spectral efficiency represents the information bits that the resource element (RE) can carry.

It will be appreciated that, before the base station sends downlink data, it is not clear what the conditions of the data channel are. In order to improve reliability of data transmission, the customer premise equipment 10 can be used to measure the quality of the channel and feed back to the network device. The communication protocol quantizes the channel quality into a sequence of 0-15, and the sequence is defined as CQI. Each CQI corresponds to a mapping relationship.

In an embodiment, the RF system 24 includes N antennas, wherein the N antennas are disposed at intervals along a peripheral direction of the customer premises equipment 10, and radiating surfaces of the N antennas face at least four different directions. That is, each antenna has a radiating surface which can be understood as a plane in which a radiator of the antenna used to radiate an antenna signal is located. The radiating surfaces of the N antennas face at least four directions to achieve a 360° omnidirectional coverage of the horizontal plane. A direction of the radiating surface of the antenna is different, and a beam scan range of the corresponding antenna is also different. The N antennas can be respectively disposed at different positions of the customer premise equipment 10, so that the radiating surfaces of the N antennas at least face four directions and the beam scan ranges of the antennas can achieve the 360° omnidirectional coverage of the horizontal plane.

The N antennas can include a directional antenna and/or a non-directional antenna. The N antennas can transmit and receive an antenna signal of the preset frequency band. Exemplary, the N antennas can be directional antennas or omnidirectional antennas for transmitting and receiving the antenna signal. For example, the N antennas can be 5G antennas, 4G antennas, WiFi antennas, Bluetooth antennas, or the like, for transmitting and receiving the antenna signal of corresponding frequency band.

N is the number N of the antennas, and $N \geq 4$. For example, N can be 4, 6, 8, 10, and the like, so as to meet communication needs of the customer premise equipment. The customer premise equipment can perform the transmission and reception of the antenna signal by selecting M antennas from the N antennas as the transceiver antenna group to directionally cater to directions of the base station's uplink and downlink waves. M is less than or equal to N.

According to MxM MIMO technology supported by the RF system of the customer premises equipment 10, the processor 22 may be configured to select M antennas from the N antennas to form a plurality of first transceiver antenna groups. Exemplary, if the customer premise equipment 10 needs to support 3x3 MIMO, it needs to select 3 antennas from the plurality of antennas as the transceiver antenna groups; if the customer premise equipment 10 needs to support 4x4 MIMO, it needs to select 4 antennas from the plurality of antennas as the transceiver antenna groups, etc.

In an embodiment, the processor 22 is configured to configure a plurality of first transceiver antenna groups from the N antennas; wherein the second transceiver antenna group consists of M antennas, the M antennas of the first transceiver antenna group have three sequentially adjacent radiating surfaces in different directions, and $3 \leq M \leq N$.

As shown in FIG. 5, when N = 4, the radiating surfaces of the four antennas face four directions, and all the directions of the radiating surfaces are different so as to achieve the 360° omnidirectional coverage of the horizontal plane. For example, each of the antennas A1, A2, A3 and A4 has a radiating surface, i.e., the antenna A1 has a radiating surface 1, and the antenna A3 has a radiating surface 2, the antenna A2 has a radiating surface 3, and the antenna A4 has a radiating surface 4. The four radiating faces are sequentially arranged, and the directions of the four radiating surfaces are different, so that the 360° omnidirectional coverage of the beam scanning horizontal plane can be achieved.

The processor 22 can be configured to configure a plurality of first transceiver antenna groups from the four antennas, wherein the first transceiver antenna group can be composed of three antennas. The three antennas of the first transceiver antenna group have three adjacent radiating surfaces facing different directions. For example, the processor 22 can configured four groups of first transceiver antenna groups, the four first transceiver antenna groups may be (A1, A2, A3), (A2, A3, A4), (A3, A4, A1), and (A4, A1, A2).

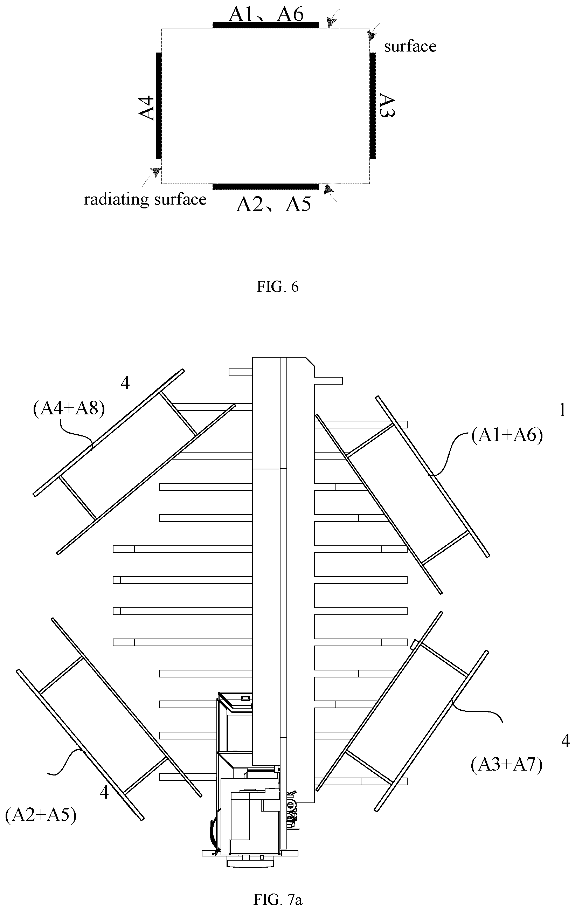

As shown in FIG. 6, when N = 6, the radiating surfaces of the six antennas face four directions, and the directions of the radiating surfaces are different so as to achieve the 360° omnidirectional coverage of the horizontal plane. For example, each of the antennas A1, A2, A3, A4, A5 and A6 has a radiating surface, wherein the antennas A1 and A6 have a radiating surface 1, the antenna A3 has a radiating surface 2, the antennas A2 and A5 have a radiating surface 3, the antenna A4 has a radiating surface 4, and the four radiating faces are sequentially arranged. The directions of the four radiating surfaces are different, so that the 360° omnidirectional coverage of the beam scanning horizontal plane can be achieved. For example, the processor 22 can configure a plurality of first transceiver antenna groups, these first transceiver antenna groups may be (A1, A2, A3), (A2, A3, A4), (A3, A4, A1), (A4, A1, A2), (A4, A1, A5), (A4, A6, A5), and the like.

The processor 22 can be configured to control the RF circuit 242 to correspondingly measure the network information of the antenna signal received when each first transceiver antenna group is in the working state. Then, the processor 22 can obtain the network information of the antenna signal corresponding to the plurality of first transceiver antenna groups from the RF circuit 242, and determine a target first transceiver antenna group according to the plurality of measured network information. When the target first transceiver antenna group is determined, the processor 22 can configure the RF circuit 242 to control the target first transceiver antenna group to be in the working state so as to transmit and receive the antenna signal. In an embodiment, the processor 22 is configured to control the RF circuit 242 to sequentially conduct the RF path between each of the first transceiver antenna groups and the RF transceiver unit 2422. For example, when N = 4, the RF circuit 242 can be controlled to sequentially conduct the RF path between the first transceiver antenna group (A1, A2, A3) and the RF transceiver unit 2422, the RF path between the first transceiver antenna group (A2, A3, A4) and the RF transceiver unit 2422, the RF path between the first transceiver antenna group (A3, A4, A1) and the RF transceiver unit 2422, the RF path between the first transceiver antenna group (A4, A1, A2) and the RF transceiver unit 2422, so that each of first transceiver antenna groups is in operation, and the RF circuit 242 can correspondingly measure the network information of the antenna signal received by each of the first transceiver antenna groups. The processor 22 may screen out a first transceiver antenna group with the largest network information, according to the plurality of network information obtained from the RF circuit 242, as the target first transceiver antenna group. The processor 22 may be further configured to control the RF circuit 242 to conduct a RF path where the target first transceiver antenna group is located according to the determined target first transceiver antenna group, so that the target first transceiver antenna group can transmit and receive corresponding the antenna signal.

In an embodiment, the N antennas can be provided in the customer premise equipment 10, and the radiating surface of the N antenna face at least four different directions. According to the communication requirements of the customer premise equipment 10, the processor 22 can be configured to select M antennas from the N antennas as the first transceiver antenna groups, thereby controlling the plurality of first transceiver antenna groups to correspondingly measure the network information of the antenna signal, and selecting the target first transceiver antenna groups from the plurality of first transceiver antenna groups. Accordingly, the processor 22 can automatically search the target first transceiver antenna group and directionally cater to directions of the base station's uplink and downlink waves, so as to complete the transmission and reception of the antenna signal, thereby improving the overall signal coverage and enhancing the throughput.

In an embodiment, the number M of the first transceiver antenna groups may also be greater than or equal to 4, wherein three sequentially adjacent radiating surfaces include a first radiating surface, a second radiating surface, and a third radiating surface. The radiating surface of at least one antenna in the M antennas is the first radiating surface, the radiating surfaces of at least two antennas form the second radiating surface, and the radiating surface of at least one antenna is the third radiating surface, wherein $M \geq 4$. Exemplary, when N = 8, eight antennas are uniformly distributed at intervals in four faces along the peripheral direction of the customer premise equipment 10, and the first transceiver antenna group can include four antennas, wherein the radiating surface of one antenna is the first radiating surface, the radiating surfaces of two antennas from the second radiating surface, and the radiating surface of one antenna is the third radiating surface. It should be noted that, the number M of the first transmitting group antennas can be set according to the actual demand, and the number M of the first transceiver antenna groups is not further limited in the present disclosure.

In an embodiment, the processor 22 can be further configured to configure a plurality of second transceiver antenna groups from the N antenna, wherein the second transceiver antenna group consists of K antennas, the K antennas of the second transceiver antenna group have two adjacent radiating surfaces facing different directions. It is noted that, the number M of antennas in the first transceiver antenna group is equal to the number K of antennas in the second transceiver antenna.

It can also be understood that, if the second transceiver antenna group consists of (k1 + k2) antennas, the radiating surfaces of the k1 antennas face towards one direction, and the radiating surfaces of the k2 antennas face toward the other direction, and the radiating surface of one antenna in the k1 antennas is adjacent to the radiating surface of one antenna in the k2 antennas.

Exemplary, when N = 6, the radiating surfaces of the four antennas face four directions, and the directions of the respective radiating surfaces are different, so as to achieve a 360° omnidirectional coverage of the horizontal plane. For example, each antenna in four antennas A1, A2, A3, A4, A5 and A6 has a radiating surface, wherein the antennas A1 and A6 have a radiating surface 1, the antenna A3 has a radiating surface 2, the antenna A2 and A5 have a radiating surface 3, the antenna A4 has a radiating surface 4. The four radiating faces are sequentially arranged, and the directions of the four radiating surfaces are different, so that the 360° omnidirectional coverage of the beam scanning horizontal plane can be achieved.

The processor 22 can be configured to configure a plurality of second transceiver antenna groups from the six antennas, wherein the first transceiver antenna group can be composed of three antennas, and the three antennas of the second transceiver antenna have two adjacent radiating surfaces facing towards different directions. For example, the processor 22 can be configured to screen out three antennas from the six antennas A1, A2, A3, A4, A5 and A6 to constitute a plurality of second transceiver antenna groups, and these second transceiver antenna groups may be (A1, A6, A4), (A1, A6, A3), (A2, A5, A3), (A2, A5, A4), and the like.

In an embodiment, the processor 22 can be configured to control the RF circuit 242 to make the plurality of second transceiver antenna groups be in the working state in sequence to receive an antenna signal. When each of the second transceiver antenna groups is in the working state, the RF circuit 242 can correspondingly measure the network information of the antenna signal received by the second transceiver antenna group. Then, the processor 22 can obtain the network information of the antenna signal based on the plurality of second transceiver antenna groups, determine a target second transceiver antenna group, and configure the RF circuit 242 to control the target second transceiver antenna group to transmit and receive the antenna signal.

In an embodiment, each antenna carries identification information for indicating the radiating surface of the antenna. The identification information is used to identify the radiating surface of each antenna. Exemplary, the radiating surface can be identified by at least one of number, letter, and symbol. The processor 22 can also be configured to obtain the identification information of each antenna in the target first transceiver antenna group, switch the target first transceiver antenna group to the second transceiver antenna group associated with the identification information according to the identification information, and obtain the measured network information based on the second transceiver antenna group to determine a new target first transceiver antenna group.

Exemplary, when N = 6, and the target first transceiver antenna group is the first transceiver antenna group (A1, A2, A4), the second transceiver antenna group associated with the identification information of the first transceiver antenna group (A1, A2, A4) includes (A4, A1, A6) and (A2, A5, A4). That is, in the second transceiver antenna group associated with each antenna in the first transceiver antenna group, the identification information of two antennas is the same as the identification information of the two antennas within the first transceiver antenna group. The processor 22 can be configured to sequentially switch the target first transceiver antenna group to the second transceiver antenna groups (A4, A1, A6) and (A2, A5, A4), and update the target first transceiver antenna group based on the network information measured by the second transceiver antenna groups (A4, A1, A6) and (A2, A5, A4).

In this embodiment, the target first transceiver antenna group can be updated based on the plurality of second transceiver antenna groups, that is, the RF circuit 242 can be configured to control the target transceiver antenna to directionally cater to the directions of the base station's uplink and downlink waves, so as to complete the transmission and reception of the antenna signal, thereby improving the overall signal coverage and enhancing the throughput.

In an embodiment, the processor 22 can be configured to control the RF circuit 242 to make the plurality of first transceiver antenna groups and the plurality of second transceiver antenna groups be alternately in a working state. For example, the RF circuit 242 is controlled to switch the transceiver antenna groups according to the following switching path: first transceiver antenna group → second transceiver antenna group → first transceiver antenna group → ...... →

second transceiver antenna group. Then, the RF circuit 242 can correspondingly measure and obtain network information corresponding to the plurality of first transceiver antenna groups and the plurality of second transceiver antenna groups. The processor 22 can determine the target first transceiver antenna group or the second target transceiver antenna group according to the plurality of network information acquired by the RF circuit 242. When the processor 22 determines the target first transceiver antenna group or the second target transceiver antenna group, the RF circuit 242 can be configured to control the target first transceiver antenna group or the target second transceiver antenna group to transmit and receive an antenna signal.

In an embodiment, the processor 22 is further configured to configure a plurality of third transceiver antenna groups from the N antennas, wherein radiating surfaces of J antennas of the third transceiver antenna group are different, and the number of radiating surface facing directions in J antennas is the same as the number of radiating surface facing directions in N antennas.

Exemplary, when N = 4, the third transceiver antenna group consists of four antennas, and the four antennas of the third transceiver antenna group have four radiating surfaces that are adjacent to each other and face different directions. That is, the directions of the radiating surfaces of the four antennas are different. When N = 4, the processor 22 configures a third transceiver antenna group from the four antennas.

The processor 22 is further configured to screen out a reference access antenna group according to the third transceiver antenna group, and control the RF circuit 242 in accordance with a first preset switching strategy, so that RF circuit 242 sequentially controls the plurality of transceiver antenna groups to be in the working state according to a sequence of switching the reference access antenna group to each of the first transceiver antenna groups. Then, the processor 22 can obtain the network information corresponding to the plurality of first transceiver antenna groups measured by the RF circuit 242. The first preset switching strategy includes alternately switching the reference access antenna group with the first transceiver antenna group, and the reference access antenna group is used as an initial transceiver antenna group.

Exemplary, when N = 4, the first transceiver antenna group can be the first transceiver antenna group (A1, A2, A3), (A2, A3, A4), (A3, A4, A1), (A4, A1, A2), or the third transceiver antenna group (A1, A2, A3, A4). The processor 22 can be further configured to use the third transceiver antenna group as the initial transceiver antenna group for receiving a wireless signal, and switch the antenna group in accordance with the first preset switching strategy. For example, the RF circuit 242 can be configured to control a plurality of transceiver antenna groups to be in the working state in the following order: the third transceiver antenna group (A1, A2, A3, A4) → the first transceiver antenna group (A1, A2, A3) → the third transceiver antenna group (A1, A2, A3, A4) → the first transceiver antenna group (A2, A3, A4) → the third transceiver antenna group (A1, A2, A3, A4) → the first transceiver antenna group (A3, A4, A1) → the third transceiver antenna group (A1, A2, A3, A4) → the first transceiver antenna group (A4, A1, A2).

In this embodiment, when the two first transceiver antenna groups are switched, they will be undertaken by the third transceiver antenna group (A1, A2, A3, A4). Therefore, the efficiency of searching the antenna signal during the switching process can be improved.

Further, when the processor 22 determines the target first transceiver antenna group, it is possible to update and process the determined target first transceiver antenna group based on the second transceiver antenna group referring to the above embodiments. The details will not be described here.

As the 5G era is coming, the customer premise equipment 10 supports both the traditional 2G/3G/4G networks and the 5G NR network (including NSA and SA schemes). When the customer premise equipment 10 supports 5G communication, a 4x4 MIMO technology is generally used to achieve antenna forming, so that the downlink 4x4 MIMO ultimately obtains the best data transfer performance. When the customer premise equipment 10 supports 4x4 MIMO, the processor 22 can be configured to screen out four antennas from the N antennas to constitute a plurality of first transceiver antenna groups.

In an embodiment, the customer premise equipment 10 can include eight antennas, and the eight antennas can include an NR directional antenna and/or a NR non-directional antenna. The eight antennas can be used to transmit and receive 5G signal of the Sub-6G band. In an embodiment, the customer premise equipment can record the eight antennas as A1, A2, A3, A4, A5, A6, A7, and A8, respectively.

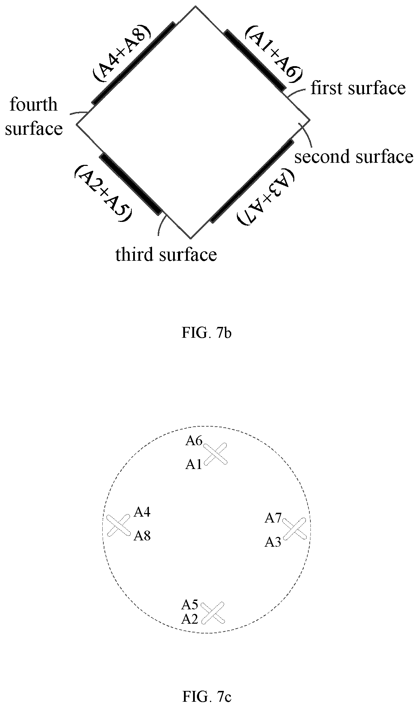

As shown in FIGS. 7a to 7c, in an embodiment, the eight antennas include four antenna groups arranged in pairs, which can be denoted as antenna group 1, antenna group 2, antenna group 3 and antenna group 4 respectively. The four antenna groups are distributed on four surfaces at intervals along the peripheral direction of the customer premise equipment, and two antennas of the same antenna group are distributed on the same surface. Exemplarily, the antenna group 1, the antenna group 2, the antenna group 3 and the antenna group 4 are sequentially arranged on the first surface, the second surface, the third surface and the fourth surface in a clockwise direction.

In an embodiment, the antenna A1 and the antenna A6 constitute the antenna group 1, which are distributed on the first surface and have a radiating surface 1. The antenna A3 and the antenna A7 constitute the antenna group 3, which are distributed on the second surface and have a radiating surface 2. The antenna A2 and antenna A5 constitute the antenna group 2, which are distributed on the third surface and both have a radiating surface 3. The antenna A4 and antenna A8 constitute the antenna group 4, which are distributed on the fourth surface and have a radiating surface 4.

In an embodiment, two adjacent radiating surfaces of the radiating surface of the antenna group 1, the radiating surface of the antenna group 3, the radiating surface of the antenna group 2, and the radiating surface of the antenna group 4 form an acute angle or right angle. The radiating surface can be understood as a plane in which a side of the antenna's radiating patch facing outwards lies, and the antenna receives an electromagnetic wave signal from the surface. As shown in FIG. 7a, the radiation surface of the antenna group 1 and the radiation surface of the antenna group 2 are arranged at an acute angle or a right angle, the radiating surface of the antenna group 2 and the radiation surface of the antenna group 3 are arranged at an acute angle or a right angle, the radiating surface of the antenna group 3 and the radiation surface of the antenna group 4 are arranged at an acute angle or a right angle, the radiating surface of the antenna group 4 and the radiation surface of the antenna group 1 are arranged at an acute angle or a right angle, so that the 360° omnidirectional coverage of the beam scanning range in horizontal plane can be achieved.

In an embodiment, the antenna signal that can be transmitted and received by the eight antennas can be understood as 5G signal with the Sub-6G frequency band, i.e., a Sub-6G signal. The antennas A2, A4, A5 and A8 can support n41, n77, n78, n79 and B46, i.e., they can support 2.496 GHz-6GHz. The antenna A1, A3, A6 and A7 can support n77, n78, n79 and B46, i.e., they can support 3.3 GHz-6GHz.

In an embodiment, each antenna group includes two antennas, wherein one antenna is a +45° polarized antenna, and another antenna is a -45° polarized antenna. Polarization directions of the antennas constitute an orthogonal relationship, thereby reducing cross-correlation between two antennas in a group. Exemplary, the antennas A1, A2, A3 and A4 are +45° polarized antennas, and the antennas A5, A6, A7 and A8 are -45 °polarized antennas.

Alternatively, one antenna group may include two antennas, wherein one antenna is a vertical polarization antenna, and another antenna is a horizontal polarization antenna.

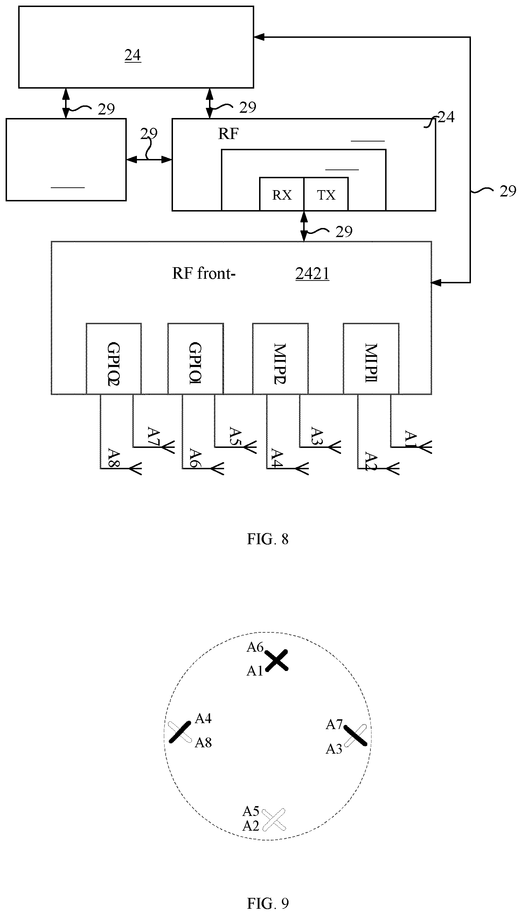

In an embodiment, as shown in FIG. 8, the RF front-end unit 2423 further includes 4 groups of antenna ports, which are denoted as antenna ports G1, G2, G3 and G4 respectively. The antenna port G1 is configured to be connected to the antennas A1, A2, the antenna port G2 is configured to be connected to the antennas A3, A4, the antenna port G3 is configured to be connected to the antennas A5, A6, and the antenna port G4 is configured to connect to the antennas A7, A8. The antenna port can be an interface MIPI for mobile industry processor 22 and/or a universal input/output GPIO. Exemplary, antennas A1, A2 are connected to a MIPI1 interface, the antennas A3, A4 are connected to a MIPI2 interface, the antennas A5, A6 are connected to a GPIO1 interface, and the antenna A7, A8 are connected to a GPIO2 interface. It should be noted that, two antennas on the same MIPI or GPIO cannot coexist at the same time.

When the RF path between the transceiver antenna group and the RF transceiver unit 2422 needs to be conducted, the MIPI control unit can output clock and data signal to corresponding pin connected to each antenna in the transceiver antenna group, and/or the GPIO control unit can output high-level signal to corresponding pin connected to each antenna in the transceiver antenna group.

In the following embodiments, N = 8 is taken as an example for description.

In an embodiment, the processor 22 can be configured to screen out four antennas from eight antennas based on a permutation to constitute a plurality of first transceiver antenna groups. The first transceiver antenna group can include four antennas. As shown in FIG. 9, the four antennas within the first transceiver antenna group are distributed on three sequentially adjacent faces, and a set of antennas are disposed on a middle surface of the three sequentially adjacent faces. That is, two antennas form the same antenna group (e.g., the same antenna group may be the antenna group 1, the antenna group 2, the antenna group 3 or the antenna group 4) and are distributed on the middle surface. The other two antennas are respectively distributed on two faces adjacent to the intermediate surface. In other word, the four antennas of the first transceiver antenna group have three sequentially adjacent radiating surfaces toward different directions. Three sequentially adjacent radiating faces include a first radiating surface, a second radiating surface, and a third radiating surface, wherein the radiating surface of an antenna in the four antennas is the first radiating surface, the radiating surfaces of two antennas form the second radiating surface, the radiating surface of an antenna is the third radiating surface. Exemplary, the first transceiver antenna group can be the first transceiver antenna groups such as (A1, A6, A8, A3), (A4, A8, A2, A6), (A2, A5, A3, A8), (A3, A4, A2, A6), etc.

The processor 22 can configure the RF circuit 242 to control the MIPI control unit and/or the GPIO control unit to control each first transceiver antenna group to search an antenna signal. The customer premise equipment 10 uses a scheme of four antennas (selected from a plurality of antennas), i.e., there are four transceiver antennas on the RF path, which can realize 1T4R (one transmitter four receivers, i.e., there is a path for transmitting and four paths for receiving) and 2T4R (two transmitter four receivers, i.e., there are two paths for transmitting and four paths for receiving).

In an embodiment, the processor 22 can configure the RF circuit 242 to control the MIPI control unit and/or the GPIO control unit to control each first transceiver antenna group to search antenna signal, and to correspondingly measure network information measured by each first transceiver antenna group. In an embodiment, the RF circuit 242 can control and conduct the RF path between each transceiver antenna group and the RF transceiver unit 2422 in turn, so as to make each first transceiver antenna group be in a working state, and then correspondingly measure network information of the received antenna signal of each first transceiver antenna group.

The processor 22 can obtain network information corresponding to each of the first transceiver antenna groups from the RF circuit 242, and further determine the target first transceiver antenna group. Exemplary, a reference signal parameter is selected from at least one signal parameter of the network information, a reference signal parameter with a maximum value is selected from a plurality of network information, and the network information corresponding to the reference signal parameter with maximum value is used as the target network information. In an embodiment, the network information may be used as the reference signal receiving power. That is, the processor may be configured to obtain a plurality of reference signal receiving powers of a plurality of transceiver antenna groups, obtain the maximum value of the plurality of reference signal receiving powers, and use the maximum value as target network information, wherein the first transceiver antenna group corresponding to the target network information is the target first transceiver antenna group. The processor 22 configures the RF circuit 242 to control the target first transceiver antenna group to transmit and receive the antenna signal.

No matter where the base station is, the above customer premise equipment 10 can intelligently determine the target first transceiver antenna group (the optimal four antennas are used as transmitting/receiving antennas), so as to dynamically determine the best antenna transmitting/receiving directions for communication with the base station, and directionally cater to directions of the base station's uplink and downlink waves to complete the transmission and reception of 5G signal, thereby improving the overall signal coverage and enhances the throughput, while ensuring the high speed and high communication capacity of 4x4 MIMO. Accordingly, the present disclosure improves the antenna gain, increases the coverage, and avoids the energy consumption of other antennas with weak receiving signal during operation, which is beneficial to the heat dissipation of the system.

In an embodiment, two antennas with the same radiating surface directions (in the same antenna group) have different polarization directions. One antenna is a +45° polarized antenna, and another antenna is a -45° polarized antenna. Polarization directions of the antennas constitute an orthogonal relationship, thereby reducing cross-correlation between two antennas in a group. Exemplary, the antennas A1, A2, A3 and A4 are +45° polarized antennas, and the antennas A5, A6, A7 and A8 are -45°polarized antennas.

Each antenna carries an identification information for indicating the radiating surface of each antenna. The antennas A1, A6 have a radiating surface 1, the antennas A2, A5 have a radiating surface 3, the antenna A3, A7 have a radiating surface 4, and the antenna A4, A8 have a radiating surface 4. Exemplary, the radiating surfaces 1, 2, 3, 4 can be identified by 001, 002, 003, 004, respectively. It should be noted that, the identification information of the radiating surfaces can also be represented by at least one of the numbers, letters, and symbols, and the identification information of the radiating surfaces are not further limited in the present disclosure.

Further, the antennas A1, A2 are connected to the MIPI1 interface, the antennas A3, A4 are connected to the MIPI2 interface, the antennas A5, A6 are connected to the GPIO1 interface, the antennas A7, A8 are connected to the GPIO2 interface. The processor 22 can be configured to construct a mapping relational table between an antenna port and the radiating surface of each antenna, and store the mapping relational table in the memory 21. When the RF circuit 242 needs to be controlled to switch between different transceiver antenna groups to receive an antenna signal, the processor 22 can retrieve the mapping relational table from the memory, and control the RF circuit 242 according to the mapping relational table to correspondingly conduct the RF path of each transceiver antenna group.

In an embodiment, when the processor 22 acquires the target first transceiver antenna group, the processor 22 is further configured to obtain polarization direction and identification information of each antenna in the target first transceiver antenna group. A first antenna and a second antenna to be switched in the target first transceiver antenna group are determined according to the identification information. The first antenna is switched to the third antenna which has the same identification information with the first antenna, while has a different polarization direction with the first antenna. The second antenna is switched to the fourth antenna which has the same identification information with the second antenna, while has a different polarization direction with the second antenna. Exemplary, if the target first transceiver antenna group is the first transceiver antenna group (A4, A6, A1, A7), the identification information of the first antenna to be switched in the target first transceiver antenna group can be determined as 004 according to the identification information 004, 001, 001 and 002, and the identification information to be switched can be determined as 002; then, the first antenna A4 and the second antenna A7 can be determined. The first antenna A4 of the target first transceiver antenna group can be switched to the third antenna A8 having the same identification information with the first antenna A4 and an opposite polarization direction with the first antenna A4, and the second antenna A7 can be switched to the fourth antenna A3 having the same identification information with the second antenna A7 and an opposite polarization direction with the second antenna A7 so as to form a new first transceiver antenna group (A8, A6, A1, A3). The RF circuit 242 can switch the target first transceiver antenna group to the first transceiver antenna group (A8, A6, A1, A3) configured by the processor, and correspondingly measure network information of antenna signal received by the first transceiver antenna group (A8, A6, A1, A3). The processor 22 may correspondingly obtain two network information corresponding to the target first transceiver antenna group (A4, A6, A1, A7) and the first transceiver antenna group (A8, A6, A1, A3), compare the two network information, and set the first transceiver antenna group corresponding to the larger network information as a new target first transceiver antenna group, so as to update the original target first transceiver antenna group, Then, the RF circuit 242 can be configured to control the new target first transceiver antenna group to be in the working state so as to transmit and receive the antenna signal.

In this embodiment, the target first transceiver antenna group can be calibrated and updated, and the antenna gain can be further improved.

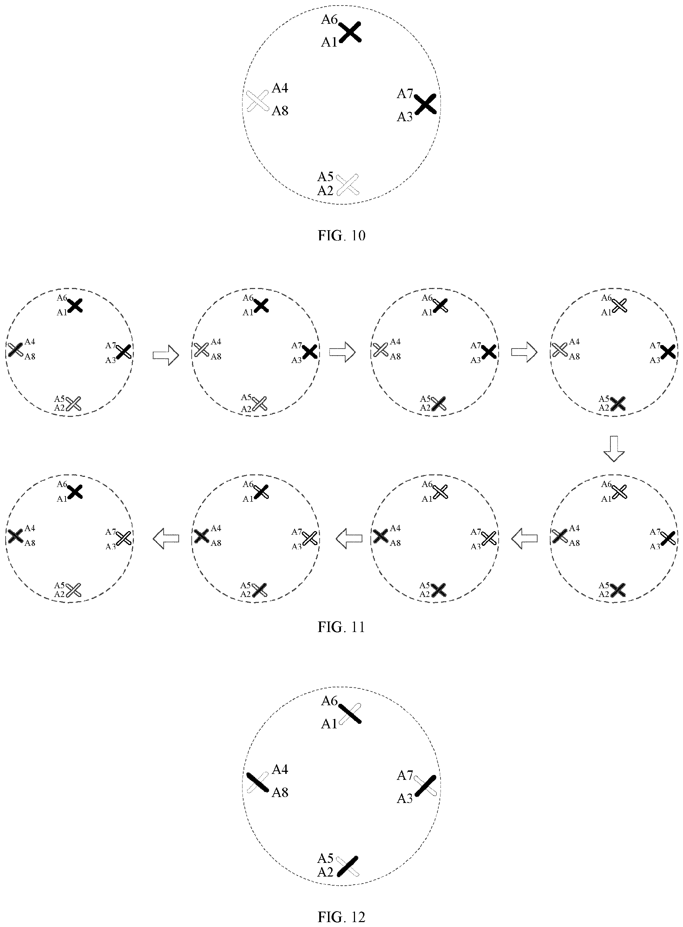

In an embodiment, the processor 22 can be configured to screen out four antennas from eight antennas based on permutation, so as to constitute a plurality of second transceiver antenna groups. As shown in FIG. 10, the four antennas of the second transceiver antenna group have two adjacent radiating surfaces facing different directions. That is, the second transceiver antenna group includes two antenna groups, wherein the two antenna groups are distributed on two adjacent faces. For example, four second transceiver antenna groups can be recorded as the second transceiver antenna groups (A1, A6, A3, A7), (A3, A7, A2, A5), (A2, A5, A4, A8), and (A4, A8, A1, A6).

Based on the configured second transceiver antenna groups, the processor 22 can control the RF circuit 242 to conduct the RF path of the plurality of second transceiver antenna groups, so as to make the RF circuit 242 correspondingly measure network information of the antenna signal received by the plurality of second transceiver antenna groups. The processor 22 can determine the target second transceiver antenna group according to the plurality of network information measured by the RF circuit 242, and can configure the RF circuit 242 to control and conduct the RF pathway where the target second transceiver antenna group is located so as to enable the target second transceiver antenna group to be in working state for transmitting and receiving the antenna signal.

In an embodiment, the processor 22 can configure the RF circuit 242 to obtain identification information of each antenna in the target first transceiver antenna group, and screen out a plurality of second transceiver antenna groups for updating the target first transceiver antenna group according to the identification information. When the plurality of second transceiver antenna groups are determined, the RF circuit 242 can be controlled to sequentially conduct the RF pathway of each second transceiver antenna groups, and correspondingly measure the network information corresponding to the plurality of second transceiver antenna groups. The processor 22 can obtain the network information corresponding to the plurality of second transceiver antenna groups from the RF circuit 242, configure the RF circuit 242 to update the target first transceiver antenna group, and control the RF circuit 242 to make the new target first transceiver antenna group transmit and receive the antenna signal.

Exemplary, when the target first transceiver antenna group is the first transceiver antenna group (A1, A6, A3, A4), it can obtain identification information 001, 001, 003, and 004 of each antenna. Further, the processor 22 can be configured to screen out a plurality of second transceiver antenna groups (A4, A8, A6, A1, A3 or A7) and (A6, A1, A3, A7) for updating the target first transceiver antenna group according to the identification information 001. Two antennas within the selected second transceiver antenna group must have a radiating surface 1 with the identification information 001. Since the RF circuit 242 can measure the network information of the plurality of second transceiver antenna groups, the processor 220 can correspondingly measure network information of antenna signal based on each second transceiver antenna group so as to obtain network information with the maximum value, and compare the network information with the maximum value with the network information corresponding to the target first transceiver antenna group. If the network information with the maximum value is larger, the second transceiver antenna group having the network information with the maximum value is used as a new target first transceiver antenna group. Then, the RF circuit 242 can be further controlled to conduct the RF path where the new target first transceiver antenna group is located, so that the target first transceiver antenna group can transmit and receive the antenna signal. On the contrary, the original target first transceiver antenna group will kept unchanged.

In the embodiment, the customer premise equipment 10 can more accurately determine the target first transceiver antenna group, so as to dynamically determine the best antenna transmitting/receiving directions for communication with the base station, and directionally cater to directions of the base station's uplink and downlink waves to complete the transmission and reception of 5G signal, thereby improving the overall signal coverage and enhances the throughput, while ensuring the high speed and high communication capacity of 4x4 MIMO. Accordingly, the present disclosure improves the antenna gain, increases the coverage, and avoids the energy consumption of other antennas with weak receiving signal during operation.

In an embodiment, the customer premise equipment 10 can also determine the target first transceiver antenna group in another way. For example, the processor 22 controls the RF circuit 242 to implement switching control of a plurality of transceiver antenna groups in accordance with the following alternating path: first transceiver antenna group → second transceiver antenna group → first transceiver antenna group → ...... → second transceiver antenna group.

In an embodiment, the adjacently switched first transceiver antenna group and the second transceiver antenna group both have two antennas with the same identification information.

It should be noted that, the RF circuit 242 may implement switching control of a plurality of transceiver antenna groups in accordance with a plurality of paths.

In the process of controlling the switching of the plurality of transceiver antenna groups, the RF circuit 242 can alternately measure the network information of the received antenna signal when the plurality of first transceiver antenna groups and the plurality of second transceiver antenna groups are in the working state. The processor 22 can determine the target first transceiver antenna group based on the network information corresponding to the plurality of first transceiver antenna groups and the plurality of second transceiver antenna groups alternately measured by the RF circuit 242. Exemplary, network information having the maximum value can be selected from a plurality of network information, and a transceiver antenna group corresponding to the network information having the maximum value is used as the target first transceiver antenna group. The target first transceiver antenna group is the first transceiver antenna group or the second transceiver antenna group.

Further, the processor 22 can obtain identification information of each antenna radiating surface in the first transceiver antenna group currently in the working state. Exemplary, as shown in FIG. 11, if the current first transceiver antenna group is a first transceiver antenna group (A1, A6, A3, A4), a corresponding alternately switching path can be as follows: first transceiver antenna group (A1, A6, A3, A4) → second transceiver antenna group (A1, A6, A3, A7) → first transceiver antenna group (A2, A1, A3, A7) → second transceiver antenna group (A2, A5, A3, A7) → first transceiver antenna group (A2, A5, A3, A4) → second transceiver antenna group (A2, A5, A4, A8) → first transceiver antenna group (A4, A8, A2, A1) → second transceiver antenna group (A1, A6, A4, A8).

The processor 22 can be configured to obtain network information which are measured based on the first transceiver antenna group (A1, A6, A3, A4) and the second transceiver antenna group (A1, A6, A3, A7) so as to select a switching path for the next transceiver antenna group. If the network information measured based on the first transceiver antenna group (A1, A6, A3, A4) is greater than the network information measured based on the second transceiver antenna group (A1, A6, A3, A7), the second transceiver antenna group (A1, A6, A3, A7) is switched to the first transceiver antenna group (A1, A6, A4, A8). Conversely, the second transceiver antenna group (A1, A6, A3, A7) is switched to the first transceiver antenna group (A2, A1, A3, A7).

In the embodiment, the customer premise equipment can switch the first transceiver antenna group to the second transceiver antenna group based on alternately switching path. During the switching process, the customer premise equipment can preferentially select a next switching transceiver antenna group from the plurality of switching paths of the alternately switched path, which can improve the efficiency of determining the target first transceiver antenna group.

In an embodiment, the processor 22 is further configured to configure a plurality of third transceiver antenna groups from eight antennas. The third transceiver antenna group consists of four antennas, as shown in FIG. 12. One antenna can be selected from each of the four antenna groups to form the third transceiver antenna group, and the radiation surfaces of the four antennas of the third transceiver antenna group face four different directions.

The processor 22 can be further configured to screen out a reference access antenna group based on at least one third transceiver antenna group. When the customer premise equipment is conducted, it is not aware of distribution of base stations and NR cells around the customer premise equipment. In order to enable the customer premise equipment to access the second network system with the greatest probability, any third transceiver antenna group can be used as the reference access antenna group to attempt access. Exemplary, the reference access antenna groups can be a transceiver antenna group (A6, A8, A2, A3), a transceiver antenna group (A6, A4, A2, A7), a transceiver antenna group (A1, A8, A5, A3) and a transceiver antenna group (A1, A4, A5, A7). It should be noted that, due to n41 band limit, the last scheme (A1, A4, A5, A7) is not used as a reference access antenna group.

As an example, the third transceiver antenna group (A6, A8, A2, A3) is used as a reference access transceiver antenna group. The processor 22 can be further configured to control the RF circuit 242 to perform a switching operation of switching from the reference access antenna group to each first transceiver antenna group in accordance with the first preset switching strategy. The first preset switching strategy includes alternating switching the reference access antenna group with the first transceiver antenna group, and the reference access antenna group is used as an initial transceiver antenna group.

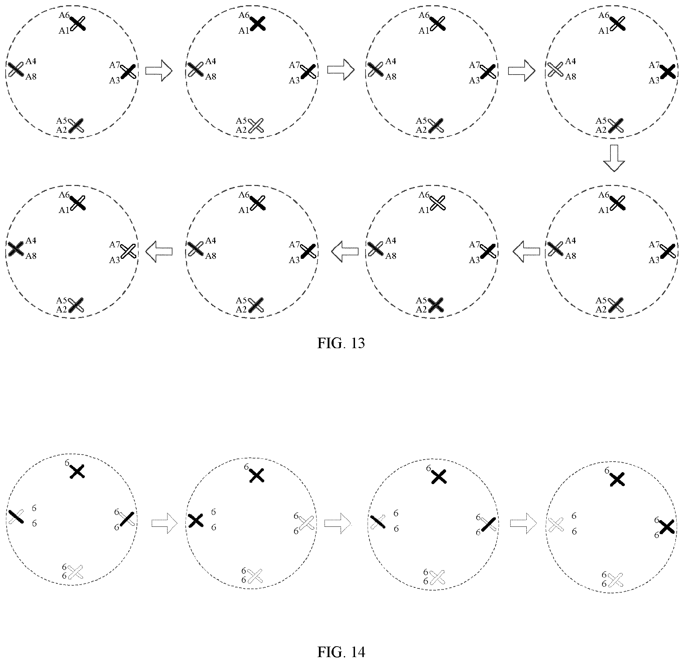

Exemplary, when the third transceiver antenna group (A6, A8, A2, A3) is successfully accessed, as shown in FIG. 13, a specific ergodically switching path according to the first preset switching strategy is as follows: third transceiver antenna group ( A6, A8, A2, A3) → first transceiver antenna group (A1, A6, A8, A3) → third transceiver antenna group (A6, A8, A2, A3) → first transceiver antenna group (A3, A7, A2, A6) → third transceiver antenna group (A6, A8, A2, A3) → first transceiver antenna group (A2, A5, A8, A3) → third transceiver antenna group (A6, A8, A2, A3) → first transceiver antenna group (A4, A8, A2, A6).

Further, the processor 22 can obtain the identification information of the reference access antenna group, and determine a plurality of first transceiver antenna groups that need to be ergodically switched in the first preset switching strategy based on the identification information. Identification information of three antennas in the plurality of first transceiver antenna groups that need to be ergodically switched is the same as the identification information of three antennas in the reference access antenna group.

Optionally, a plurality of first transceiver antenna groups that need to be ergodically switched in the first preset switching strategy can also be all of the first transceiver antenna groups.

When the RF circuit 242 controls the plurality of transceiver antenna groups to be in the working state according to the first preset switching strategy, the RF circuit 242 can correspondingly measure network information of antenna signal received by each transceiver antenna group. The processor 22 may be further configured to determine the target first transceiver antenna group according to the network information of the plurality of first transceiver antenna groups measured by the RF circuit 242.

In the embodiment, since antenna signal radiated by the NR cell has a very strong directionality, the customer premise equipment 10 can use any third transceiver antenna group as a reference access transceiver antenna group to access to the 5G network system, and when two first transceiver antenna groups are switched, they can be undertaken by the third transceiver antenna group. Therefore, a situation of dropping the network during the switching process can be avoided, and the stability of the accessed 5G network system is ensured.

In an embodiment, the customer premise equipment 10 can also determine the target first transceiver antenna group in another way. For example, the processor 22 is further configured to construct a second preset switching strategy based on the identification information of each antenna within the first transceiver antenna group. The second preset switching strategy includes alternate switching of the reference access antenna group and the first transceiver antenna group. The processor 22 is further configured to control the RF circuit 242 to perform the corresponding switching operation in accordance with the second preset switching strategy, and can obtain network information measured based on the current transceiver antenna group and the last transceiver antenna group based on the RF circuit 242. Then, the second preset switching strategy can be updated until the target first transceiver antenna group is determined.

The second preset switching strategy includes a switching path of alternately switching the plurality of reference access antenna groups and the first transceiver antenna group, and the switching path is not ergodically switching to each of the first transceiver antenna groups, while is switching to a portion of the first transceiver antenna groups.

As an example, the third transceiver antenna group (A6, A8, A2, A3) is used as the reference access antenna group. When the third transceiver antenna group (A6, A8, A2, A3) is successfully accessed, network information Q1 can be measured based on the third transceiver antenna group, and it is switched to the first transceiver antenna group (A4, A1, A6, A7) according to the second preset switching strategy. Then, network information Q2 can be correspondingly measured based on the first transceiver antenna group (A4, A1, A6, A7). The processor 22 can be configured to obtain the network information Q2 measured based on the current transceiver antenna group (first transceiver antenna group (A4, A1, A6, A7) and the network information Q1 measured based on the previous transceiver antenna group (third transceiver antenna group (A6, A8, A2, A3) so as to update the second preset switching strategy. If the network information Q2 is greater than the network information Q1, switching is performed continuously according to the following path: first transceiver antenna group (A4, A1, A6, A7) → third transceiver antenna group (A6, A8, A2, A3) → first transceiver antenna group (A2, A4, A8, A6), so as to obtain network information Q3 measured based on the first transceiver antenna group (A2, A4, A8, A6). If the network information Q3 is greater than the network information Q2, the first transceiver antenna group (A2, A4, A8, A6) is used as the target first transceiver antenna group.

In the embodiment, when the processor 22 configures the RF circuit 242 to execute the second preset switching strategy, the second preset switching strategy can be updated according to the network information measured by the current transceiver antenna group and the previous transceiver antenna group. In the updated second preset switching strategy, only a part of the first transceiver antenna groups needs to be switched, which can improve the efficiency of determining the target first transceiver antenna group.

In an embodiment, the customer premise equipment 10 can also update and process the determined target first transceiver antenna group based on the constructed plurality of second transceiver antenna groups. For example, the processor 22 is further configured to determine a plurality of second transceiver antenna groups based on the target first transceiver antenna group, and determine the target first transceiver antenna group based on the determined plurality of second transceiver antenna groups measured. When the processor 22 is further configured to obtain identification information of each antenna within the target first transceiver antenna group, a plurality of second transceiver antenna groups to be switched are determined according to the identification information. The identification information of each antenna in each second transceiver antenna group to be switched is associated with the identification information of some antennas in the target first transceiver antenna group.

Exemplary, when the target first transceiver antenna group is the first transceiver antenna group (A1, A6, A8, A3), identification information 004, 001, 001, 002 of each antenna in the first transceiver antenna group (A1, A6, A8, A3) can be obtained. Further, the second transceiver antenna group (A4, A8, A1, A6) and the second transceiver antenna group (A1, A6, A3, A7) to be switched can be determined according to identification information. Two antennas having the same identification information in the first transceiver antenna group can be maintained, and an antenna having identification information 004 can be switched to an antenna having the identification information 002. Then, the second transceiver antenna group (A1, A6, A3, A7) can be constituted. Alternatively, two antennas having the same identification information in the first transceiver antenna group can be maintained, and an antenna having identification information 002 can be switched to an antenna having the identification information 004. Then, the second transceiver antenna group (A4, A8, A1, A6) can be constituted. The RF circuit 242 can control the target first transceiver antenna group to switch to a plurality of second transceiver antenna groups to be switched, and correspondingly measure network information of the received antenna signal when the plurality of second transceiver antenna groups are in the working state.

When the processor 22 is further configured to determine the target first transceiver antenna group based on a plurality of network information measured by the determined plurality of first transceiver antenna groups, the processor 22 can be configured to perform switch according to a switching path. As shown in FIG. 14, the switching path is: first transceiver antenna group (A1, A6, A8, A3) → second transceiver antenna group (A4, A8, A1, A6) → first transceiver antenna group (A1, A6, A8, A3) → second transceiver antenna group (A1, A6, A3, A7). In the process of switching, the target first transceiver antenna group can be determined based on the network information measured by the two first transceiver antenna groups.

The processor 22 configures the RF circuit 242 to update the target first transceiver antenna group based on a plurality of network information measured by a plurality of second transceiver antenna groups.

In an embodiment, the processor 22 is further configured to construct a third preset switching strategy based on the identification information of each of the antennas within the first transceiver antenna group, the second transceiver antenna group and the third transceiver antenna group. The third preset switching strategy includes at least switching sequentially according to the first transceiver antenna group, the second transceiver antenna group, and the third transceiver antenna group.

The processor 22 is further configured to control the RF circuit 242 to control the plurality of transceiver antenna groups to be in the working state in sequence according to the third preset switching strategy, and correspondingly measure the network information of antenna signal received by each transceiver antenna group. The processor 22 can determine the target third transceiver antenna group based on the network information of the first transceiver antenna group, the second transceiver antenna group and the third transceiver antenna group correspondingly measured by the RF circuit 242. The target third transceiver antenna group is the first transceiver antenna group, or the second transceiver antenna group, or the third transceiver antenna group. Then, the RF circuit 242 can be configured to control the target third transceiver antenna group to transmit and receive the antenna signal.

In the present embodiment, the customer premise equipment can perform switching between various transceiver antenna groups based on the third preset switching strategy, thereby improving the efficiency of determining the third transceiver antenna group.

In an embodiment, the customer premise equipment 10 can work in a non-independent network mode or in an independent network mode. The 3rd generation partnership project (3GPP) defines two schemes for 5G new radio (NR) network, namely stand alone (SA) network and non-standalone (NSA) network. When the customer premise equipment 10 needs 5G communication, the customer premise equipment 10 can access the cell with the ability to support non-independent networking or independent networking, and access the air port of NR according to different networking methods, so as to enjoy 5G service.

When the customer premise equipment 10 works in a non-independent network mode, the processor 22 may be further configured to receive a measurement instruction sent by a base station based on the first network system. The measurement instruction may at least include time information configured by the base station to instruct the customer premise equipment 10 to measure the antenna signal supported by the second network system. The first network system may be 4G network system, and the second network system may be 5G network system. According to the measurement instruction, a driving mechanism may be controlled to drive the millimeter wave antenna to rotate based on the interval step strategy.

In an embodiment, the processor 22 may be configured to actively initiate the network access process of the first network system and reside in the first network system. When successfully residing in the first network system, the customer premise equipment 10 can receive the measurement instruction sent by the base station through the first network system. The measurement instruction shall at least include the time information configured by the base station, the network access threshold value for the customer premise equipment 10 residing in the second network system, etc. The time information may be used to instruct the customer premise equipment 10 to measure the time of the second network system. In some embodiments, the time information may be periodic information or aperiodic information for the customer premise equipment 10 to measure the second network system. The periodic information may be the interval between the start time of first measurement and the start time of second measurement, or the interval between the end time of the first measurement and the start time of the second measurement, or the time interval between the end time of the first measurement and the end time of the second measurement when the customer premise equipment 10 performs the two adjacent measurements.

The first network system and the second network system can correspond to different frequency band ranges. In some embodiments, the first network system may be 4G network, and the corresponding network system may be LTE system. The second network system may be 5G network, and the corresponding network system may be 5G NR system.

The measurement instructions are configured by the base station. The base station can set different time information according to the density of networks of the NR system. In some embodiments, the time information can be 1 second, 5 seconds, 10 seconds, etc. For example, when the base station determines that the networks of the NR cell around the LTE cell where the customer premise equipment 10 is located are densely distributed, and the NR system has good coverage of an area where the customer premise equipment 10 is located, the base station can control the customer premise equipment 10 to measure the time information of the second network system longer, so as to better reduce the power consumption of the customer premise equipment 10. When the base station determines that the networks of the NR cell layout around the LTE cell where the customer premise equipment 10 is located are sparsely distributed, the base station can control the customer premise equipment 10 to measure the time information of the second network system shorter, so as to ensure that the customer premise equipment 10 can detect the coverage of the second network system in time.

Alternatively, when the network where the customer premise equipment 10 resides is the first network system (4G network), and the second network system can be 5G network, the first network system (LTE system) may support NSA function, that is, support joint networking with the second network system (NR system).

In an embodiment, the processor 22 is configured to control the plurality of first transceiver antenna groups to be in the working state according to the measurement instruction to correspondingly measure network information of the antenna signal. The customer premise equipment 10 can periodically measure the network information of the antenna signal according to the measurement instruction configured by the base station, and can hereby avoid drawbacks of increasing the power consumption of the customer premise equipment 10 caused by the real-time and continuous measurement of the network information of the antenna signal.

The above description is for the purpose of illustrating implementations of the present disclosure, but not to limit the scope of the present disclosure. Any equivalent structural or process transformation performed based on the drawings and the specification of the present disclosure, applied directly and indirectly in other related art, should be within the scope of the present disclosure.

## Claims

1.  A customer premise equipment, comprising:

> N antennas, arranged at intervals along a peripheral direction of the customer premise equipment, radiating surfaces of the N antennas facing at least four different directions;
> a RF circuit, connected to the N antennas respectively, wherein the RF circuit is configured to control the antennas to transmit and receive an antenna signal, and correspondingly measure network information of the antenna signal; and
> a processor, connected to the RF circuit, and configured to:
>
> > configure a plurality of first transceiver antenna groups from the N antennas, wherein the first transceiver antenna group consists of M antennas, the M antennas of the first transceiver antenna group comprise three radiating surfaces being sequentially adjacent and facing different directions, $3 \leq M < N$, and $N \geq 4$;
> > obtain network information corresponding to the plurality of first transceiver antenna groups;
> > determine a target first transceiver antenna group according to largest network information in a plurality of the network information; and
> > configure the RF circuit to control the target first transceiver antenna group to transmit and receive the antenna signal.

2.  The customer premise equipment according to claim 1, wherein the N equals to eight, eight antennas are uniformly distributed at intervals in four faces along the peripheral direction of the customer premise equipment, each antenna carries identification information indicating the radiating surface of the antenna;

> wherein the radiating surfaces of each two antennas face the same direction, and polarization directions of two antennas with the radiating surfaces facing the same direction are different; and
> wherein the first transceiver antenna group comprises four antennas, and the processor is further configured to update the target first transceiver antenna group by:
>
> > obtaining the polarization direction and the identification information of each antenna of the target transceiver antenna group;
> > determining a first antenna and a second antenna to be switched in the target transceiver antenna group according to the identification information; and
> > switching the first antenna to a third antenna having the same identification information with the first antenna and having a different polarization direction with the first antenna; and switching the second antenna to a fourth antenna having the same identification information with the second antenna and having a different polarization direction with the second antenna; so as to configure the RF circuit to update the target first transceiver antenna.

3.  The customer premise equipment according to claim 1, wherein the processor is further configured to update the target transceiver antenna group by:

> configuring a plurality of second transceiver antenna groups from the N antennas, wherein the second transceiver antenna group consists of K antennas, the K antennas of the second transceiver antenna group comprise two radiating surfaces adjacent and facing different directions;
> obtaining a target second transceiver antenna group based on network information correspondingly measured by the plurality of second transceiver antenna groups; and
> configuring the RF circuit to control the target second transceiver antenna group to transmit and receive the antenna signal.

4.  The customer premise equipment according to claim 3, wherein the N equals to eight, eight antennas are uniformly distributed at intervals in four faces along the peripheral direction of the customer premise equipment;

> wherein the radiating surfaces of each two antennas face the same direction, and each antenna carries identification information indicating the radiating surface of the antenna; and
> wherein the processor is further configured to update the target first transceiver antenna group by:

>> obtaining the identification information of each antenna of the target transceiver antenna group;
>> screening out a plurality of second transceiver antenna groups for updating the target first transceiver antenna group according to the identification information; and
>> configuring the RF circuit to update the target first transceiver antenna group based on network information corresponding to the screened-out plurality of second transceiver antenna group.

5.  The customer premise equipment according to claim 1, wherein the processor is further configured to:

> configure a plurality of second transceiver antenna groups from the N antennas, wherein the second transceiver antenna group consists of K antennas, the K antennas of the second transceiver antenna group comprise two radiating surfaces adjacent and facing different directions, $2 \leq K < N$, and $N \geq 3$;
> control the RF circuit to make the plurality of first transceiver antenna groups and the plurality of second transceiver antenna groups be alternately in a working state; and
> update the target first transceiver antenna group according to network information corresponding to the plurality of first transceiver antenna group and the plurality of second transceiver antenna group alternately measured by the RF circuit.

6.  The customer premise equipment according to claim 5, wherein the first transceiver antenna group and the second transceiver antenna group that are adjacent and alternately switched have two antennas with the same identification information.

7.  The customer premise equipment according to claim 5, wherein the N equals to eight, eight antennas are uniformly distributed at intervals in four faces along the peripheral direction of the customer premise equipment;

> wherein the radiating surfaces of each two antennas face the same direction, the first transceiver antenna group and the second transceiver antenna group both comprise four antennas, and each antenna carries identification information indicating the radiating surface of the antenna; and
> wherein the processor is further configured to:

>> obtain the identification information of each antenna of the target first transceiver antenna group;
>> screen out a plurality of second transceiver antenna groups of the target first transceiver antenna group according to the identification information; and
>> configuring the RF circuit to update the target first transceiver antenna group based on network information correspondingly measured by the screened-out plurality of second transceiver antenna group.

8.  The customer premise equipment according to claim 1, wherein the radiating surfaces of the N antennas face four different directions, and the processor is further configured to:

configure a plurality of third transceiver antenna groups from the N antennas, wherein the third transceiver antenna group consists of J antennas, radiating surfaces of the J antennas of the third transceiver antenna group face different directions, and the number of radiating surface facing directions in the J antennas is the same as the number of radiating surface facing directions in the N antennas;

screen out a reference access antenna group according to at least one third transceiver antenna group; and switch the reference access antenna group to each first transceiver antenna group according to a first preset switching strategy, so as to obtain network information corresponding to the plurality of first transceiver antenna group and determine the target first collection antenna group; wherein the first preset switching strategy comprises alternating switching the reference access antenna group with the first transceiver antenna group, and wherein the reference access antenna group is used as an initial transceiver antenna group.

9. The customer premise equipment according to claim 8, wherein the processor is further configured to:

obtain identification information of the reference access antenna group; and determine a plurality of first transceiver antenna groups that need to be ergodically switched in the first preset switching strategy based on the identification information, wherein dentification information of three antennas in the plurality of first transceiver antenna groups that need to be ergodically switched is the same as identification information of three antennas in the reference access antenna group.

10. The customer premise equipment according to claim 8, wherein the N equals to eight, eight antennas are uniformly distributed at intervals in four faces along the peripheral direction of the customer premise equipment;

wherein the radiating surfaces of each two antennas face the same direction, the first transceiver antenna group and the second transceiver antenna group both comprise four antennas; and wherein the processor is further configured to:

configure a plurality of second transceiver antenna groups from the eight antennas, wherein the second transceiver antenna group consists of four antennas, the four antennas of the second transceiver antenna group have two adjacent radiating surfaces facing different directions; determine a plurality of second transceiver antenna group according to the target first transceiver antenna group; and configure the RF circuit to update the target first transceiver antenna group based on a plurality of network information corresponding to the determined plurality of second transceiver antenna group.

11. The customer premise equipment according to claim 1, wherein the radiating surfaces of the N antennas face four different directions, each antenna carries identification information indicating the radiating surface of the antenna, and the processor is further configured to:

configure a plurality of third transceiver antenna groups from the N antennas, wherein the third transceiver antenna group consists of J antennas, radiating surfaces of the J antennas of the third transceiver antenna group face different directions, and the number of radiating surface facing directions in the J antennas is the same as the number of radiating surface facing directions in the N antennas; screen out a reference access antenna group according to at least one third transceiver antenna group; construct a second preset switching strategy based on identification information of each antenna within the first transceiver antenna group, wherein the second preset switching strategy comprises alternating switching the reference access antenna group with the first transceiver antenna group; and obtain network information measured by a current transceiver antenna group and a previous transceiver antenna group, and update the second preset switching strategy until the target first transceiver antenna group is determined.

12. The customer premise equipment according to claim 1, wherein the N equals to eight, the radiating surfaces of eight antennas uniformly face four directions, radiating surfaces of each two antennas face the same surface and comprise two antennas, each antenna carries identification information indicating the radiating surface of the antenna, and the processor is further configured to:

configure a plurality of second transceiver antenna groups from the eight antennas, wherein the second transceiver antenna group consists of four antennas, the four antennas of the second transceiver antenna group have two adjacent radiating surfaces facing different directions;

configure a plurality of third transceiver antenna groups from the eight antennas, wherein the third transceiver antenna group consists of four antennas, the four antennas of the third transceiver antenna group have radiating surfaces facing different directions;

construct a third preset switching strategy according to the identification information of each of the antennas within the first transceiver antenna group, the second transceiver antenna group and the third transceiver antenna group, wherein the third preset switching strategy comprises at least switching sequentially according to the first transceiver antenna group, the third transceiver antenna group and the second transceiver antenna group, or the third preset switching strategy comprises at least switching sequentially according to the third transceiver antenna group, the second transceiver antenna group and the first transceiver antenna group;

execute the third preset switching strategy and obtain network information corresponding to the first transceiver antenna group, the second transceiver antenna group and the third transceiver antenna group so as to determine the target third transceiver antenna group; and

configure the RF circuit to control the target third transceiver antenna group to transmit and receive the antenna signal.

13. The customer premise equipment according to claim 1, further comprising four groups of antenna ports, wherein the four groups of antenna ports are denoted as antenna port G1, antenna port G2, antenna port G3 and antenna port G4 respectively, the number of the antennas is eight, and the eight antennas are denoted as antenna A1, antenna A2, antenna A3, antenna A4, antenna A5, antenna A6, antenna A7 and antenna A8 respectively;

wherein radiating surfaces of the antennas A1 and A6 face the same direction, radiation surfaces of the antennas A2 and A5 faces the same direction, radiation surfaces of the antennas A3 and A7 face the same direction, and radiation surfaces of the antennas A4 and A8 face the same direction; and wherein

the antenna port G1 is configured to be connected to the antennas A1, A2;
the antenna port G2 is configured to be connected to the antennas A3, A4;
the antenna port G3 is configured to be connected to the antennas A5, A6; and
the antenna port G4 is configured to be connected to the antennas A7, A8.

14. A customer premise equipment, comprising:

eight antennas, comprising four antenna groups arranged in pairs, wherein the four antenna groups are distributed on four surfaces at intervals along a peripheral direction of the customer premise equipment, and two antennas of the same antenna group are distributed on the same surface;

a RF circuit, connected to the eight antennas respectively, wherein the RF circuit is configured to control the antennas to transmit and receive an antenna signal, and correspondingly measure network information of the antenna signal; and

a processor, connected to the RF circuit, and configured to:

configure a plurality of first transceiver antenna groups from the eight antennas, wherein the first transceiver antenna group consists of four antennas, the four antennas of the first transceiver antenna group are distributed on three sequentially adjacent faces, and a set of antennas are disposed on a middle surface of the three sequentially adjacent faces;

obtain network information corresponding to the plurality of first transceiver antenna groups;

determine a target first transceiver antenna group according to largest network information in a plurality of the network information; and

configure the RF circuit to control the target first transceiver antenna group to transmit and receive the antenna signal.

15. The customer premise equipment according to claim 14, wherein polarization directions of two antennas in the same group are different, each antenna carries identification information indicating the radiating surface of the antenna, and the processor is further configured to:

obtain the polarization direction and the identification information of each antenna of the target first transceiver antenna group;

determine a first antenna and a second antenna to be switched in the target first transceiver antenna group according to the identification information; and

switch the first antenna to a third antenna having the same identification information with the first antenna and having a different polarization direction with the first antenna, and switching the second antenna to a fourth antenna having the same identification information with the second antenna and having a different polarization direction with the second antenna, so as to configure the RF circuit to update the target first transceiver antenna group.

16. The customer premise equipment according to claim 14, wherein the processor is further configured to:

configure a plurality of second transceiver antenna groups from the N antennas, wherein the second transceiver antenna group consists of four antennas, the four antennas of the second transceiver antenna group are uniformly distributed on two adjacent surfaces;
obtain a target second transceiver antenna group based on a plurality of network information correspondingly measured by the plurality of second transceiver antenna groups; and
configure the RF circuit to control the target second transceiver antenna group to transmit and receive the antenna signal.

17. The customer premise equipment according to claim 16, wherein each antenna carries identification information indicating the radiating surface of the antenna, and the processor is further configured, for the target first transceiver antenna group, to:

obtain the identification information of each antenna of the target first transceiver antenna group;
screen out a plurality of second transceiver antenna groups for updating the target first transceiver antenna group according to the identification information; and
configure the RF circuit to update the target first transceiver antenna group based on network information corresponding to the screened-out plurality of second transceiver antenna group.

18. The customer premise equipment according to claim 14, wherein the processor is further configured to:

configure a plurality of second transceiver antenna groups from the N antennas, wherein the second transceiver antenna group consists of four antennas, the four antennas of the second transceiver antenna group are uniformly distributed on two adjacent surfaces; and
update the first target transceiver antenna group according to network information corresponding to the plurality of the first transceiver antenna groups and the plurality of second transceiver antenna groups alternately obtained.

19. The customer premise equipment according to claim 14, wherein the processor is further configured to:

configure a plurality of third transceiver antenna groups from the eight antennas, wherein the third transceiver antenna group consists of four antennas, the four antennas of the third transceiver antenna group are distributed on four faces;
screen out a reference access antenna group according to at least one third transceiver antenna group; and
switch the reference access antenna group to each first transceiver antenna group according to a first preset switching strategy, so as to obtain network information corresponding to the plurality of first transceiver antenna group; wherein the first preset switching strategy comprises alternating switching the reference access antenna group with the first transceiver antenna group, and wherein the reference access antenna group is used as an initial transceiver antenna group.

20. The customer premise equipment according to claim 19, wherein the processor is further configured to:

configure a plurality of second transceiver antenna groups from the eight antennas, wherein the second transceiver antenna group consists of four antennas, the four antennas of the second transceiver antenna group comprise two radiating surfaces adjacent and facing different directions;
determine the plurality of second transceiver antenna groups according to the target first transceiver antenna group; and
configure the RF circuit to update the target first transceiver antenna group based on a plurality of network information measured by the determined plurality of second transceiver antenna groups.

21. The customer premise equipment according to claim 14, wherein each antenna carries identification information indicating the radiating surface of the antenna, and the processor is further configured to:

configure a plurality of third transceiver antenna groups from the eight antennas, wherein the third transceiver antenna group consists of four antennas, the four antennas of the third transceiver antenna group are distributed on four faces;

screen out a reference access antenna group according to at least one third transceiver antenna group;

construct a second preset switching strategy based on identification information of each antenna within the first transceiver antenna group, wherein the second preset switching strategy comprises alternating switching the reference access antenna group with the first transceiver antenna group; and

obtain network information measured by a current transceiver antenna group and a previous transceiver antenna group, and update the second preset switching strategy until the target first transceiver antenna group is determined.

22. The customer premise equipment according to claim 14, wherein each antenna carries identification information indicating the radiating surface of the antenna, and the processor is further configured to:

configure a plurality of second transceiver antenna groups from the eight antennas, wherein the second transceiver antenna group consists of four antennas, the four antennas of the second transceiver antenna group have two adjacent radiating surfaces facing different directions;

configure a plurality of third transceiver antenna groups from the eight antennas, wherein the third transceiver antenna group consists of four antennas, and radiating surfaces of the four antennas face in different directions;

construct a third preset switching strategy according to the identification information of each of the antennas within the first transceiver antenna group, the second transceiver antenna group and the third transceiver antenna group, wherein the third preset switching strategy comprises at least switching sequentially according to the first transceiver antenna group, the third transceiver antenna group and the second transceiver antenna group, or the third preset switching strategy comprises at least switching sequentially according to the third transceiver antenna group, the second transceiver antenna group and the first transceiver antenna group; and

execute the third preset switching strategy and obtain network information corresponding to the first transceiver antenna group, the second transceiver antenna group and the third transceiver antenna group so as to determine the target third transceiver antenna group.

23. The customer premise equipment according to claim 14, wherein the customer premise equipment is configured to operate in a non-independent network mode, and the processor is further configured to:

receive a measurement instruction sent by a base station based on a first network system, wherein the measurement instruction at least comprises time information configured by the base station to instruct the customer premise equipment to measure antenna signal supported by a second network system;

actively initiate a network access process of the first network system and reside in the first network system;

receive the measurement instruction sent by the base station through the first network system; and

control the plurality of first transceiver antenna groups to be in a working state according to the measurement instruction to correspondingly measure network information of the antenna signal.

FIG. 1

FIG. 2

```
┌─────────────────────────────────────────────────────────────────────────┐
│  ┌──────────────────────────────┐                                         │
│  │            23                │                                         │
│  │  ┌────────────────────────┐  │                                         │
│  │  │          ──            │  │                                         │
│  │  │ communication module 212│ │                                         │
│  │  │          ──            │  │                                         │
│  │  └────────────────────────┘  │                                         │
│  └──────────────────────────────┘                                         │
│              ↕                                                             │
│          29                                  RF system 24                 │
│                                          ┌──────────────────────────┐     │
│  ┌──────────┐      ┌──────────┐          │  ┌────────────────────┐  │     │
│  │          │  29  │          │   29     │  │        ──          │  │     │
│  │          │ ↔    │          │ ↔        │  └────────────────────┘  │     │
│  │    ──    │      │    23    │          │  ┌────────────────────┐  │     │
│  │          │      │          │          │  │            212     │  │     │
│  └──────────┘      └──────────┘          │  └────────────────────┘  │     │
│              29  ↕                        │  ┌────────────────────┐  │     │
│  ┌─────────────────────────┐             │  │            212     │  │     │
│  │     I O subsystem 24    │             │  └────────────────────┘  │     │
│  │  ┌───────────────────┐  │             │  ┌────────────────────┐  │     │
│  │  │        ──         │  │             │  │            212     │  │     │
│  │  ├───────────────────┤  │             │  └────────────────────┘  │     │
│  │  ├───────────────────┤  │             │  ┌────────────────────┐  │     │
│  │  │ o                 │  │             │  │        ──          │  │     │
│  │  └───────────────────┘  │             │  └────────────────────┘  │     │
│  └─────────────────────────┘             └──────────────────────────┘     │
│                 customer premise equipment 23                             │
└─────────────────────────────────────────────────────────────────────────┘
```

FIG.3

FIG. 4

FIG. 5

A1、A6

surface

A4

A3

radiating surface

A2、A5

FIG. 6

(A4+A8)

4

1

(A1+A6)

(A2+A5)

4

(A3+A7)

4

FIG. 7a

FIG. 7b

FIG. 7c

FIG. 8

FIG. 9

FIG. 10

FIG. 11

FIG. 12

FIG. 13

FIG. 14

## INTERNATIONAL SEARCH REPORT

| International application No. |
| --- |
| **PCT/CN2021/071687** |

**A. CLASSIFICATION OF SUBJECT MATTER**

H04B 1/401(2015.01)i;  H04B 7/06(2006.01)i;  H04B 7/08(2006.01)i;  H04W 88/10(2009.01)i

According to International Patent Classification (IPC) or to both national classification and IPC

**B. FIELDS SEARCHED**

Minimum documentation searched (classification system followed by classification symbols)

H04B; H04W; H01Q

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; JPTXT; 3GPP: 不同, 方向, 顺, 天线, 辐射, 面, 邻, 客户前置设备, 天线组, 多个, 8个, N个, 射频, 网络信息, different, direction, radiat+, face, antenna? , adjacent, client, customer, front 1w end, device, group, set, multiple, N, 8, radio frequency, RF, network information

**C. DOCUMENTS CONSIDERED TO BE RELEVANT**

| Category* | Citation of document, with indication, where appropriate, of the relevant passages | Relevant to claim No. |
| --- | --- | --- |
| PX | CN 111277298 A (GUANGDONG OPPO MOBILE TELECOMMUNICATIONS CORP., LTD.) 12 June 2020 (2020-06-12)<br>claims 1-20, description paragraphs 40-154 | 1-23 |
| A | CN 108258425 A (GUANGDONG OPPO MOBILE TELECOMMUNICATIONS CORP., LTD.) 06 July 2018 (2018-07-06)<br>description, paragraphs 37-70 | 1-23 |
| A | KR 101991179 B1 (UNIV HOSEO ACADEMIC COOP FOUND) 19 June 2019 (2019-06-19)<br>entire document | 1-23 |
| A | EP 2077604 A1 (NOKIA SIEMENS NETWORKS OY) 08 July 2009 (2009-07-08)<br>entire document | 1-23 |
| A | CN 103391556 A (FUJIAN STAR-NET RUIJIE NETWORK CO., LTD.) 13 November 2013 (2013-11-13)<br>entire document | 1-23 |
| A | CN 107465002 A (UNIV NANJING INFORMATION SCIENCE & TECHNOLOGY) 12 December 2017 (2017-12-12)<br>entire document | 1-23 |

☐ Further documents are listed in the continuation of Box C.  ☑ See patent family annex.

| | |
| --- | --- |
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **30 March 2021** | **06 April 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/071687**

| Patent document cited in search report | | | Publication date (day/month/year) | Patent family member(s) | | | Publication date (day/month/year) |
|---|---|---|---|---|---|---|---|
| CN | 111277298 | A | 12 June 2020 | None | | | |
| CN | 108258425 | A | 06 July 2018 | CN | 108258425 | B | 16 June 2020 |
| KR | 101991179 | B1 | 19 June 2019 | KR | 20170122156 | A | 03 November 2017 |
| EP | 2077604 | A1 | 08 July 2009 | None | | | |
| CN | 103391556 | A | 13 November 2013 | CN | 103391556 | B | 25 May 2016 |
| CN | 107465002 | A | 12 December 2017 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2020100703411